# EUROPÄISCHE PATENTSCHRIFT

(11) **EP 4 706 011 B1**
(45) Veröffentlichungstag und Bekanntmachung des Hinweises auf die Patenterteilung: **11.11.2026**
(21) Anmeldenummer: 24709363.6
(22) Anmeldetag: 04.03.2024
(51) Int. Cl.: G06V 10/82, G06V 20/58

(54) **VERFAHREN ZUR DETEKTION UND/ODER VERFOLGUNG UND/ODER POSITIONSPRÄDIKTION VON MEHREREN OBJEKTEN**
METHOD FOR DETECTING AND/OR TRACKING AND/OR PREDICTING THE POSITION OF A PLURALITY OF OBJECTS
PROCÉDÉ DE DÉTECTION ET/OU DE SUIVI ET/OU DE PRÉDICTION DE LA POSITION D'UNE PLURALITÉ D'OBJETS

(30) Priorität: 03.05.2023 DE 102023204063
(43) Veröffentlichungstag der Anmeldung: 11.03.2026
(73) Patentinhaber: Robert Bosch GmbH, 70442 Stuttgart (DE)
(72) Erfinder: FAION, Florian, 79219 Staufen (DE); RUPPEL, Felicia, 71272 Renningen (DE)
(86) Internationale Anmeldenummer: PCT/EP2024/055561
(87) Internationale Veröffentlichungsnummer: WO 2024/227528

(56) Entgegenhaltungen:
- ZIXIANG ZHOU ET AL: "CenterFormer: Center-based Transformer for 3D Object Detection", ARXIV.ORG, CORNELL UNIVERSITY LIBRARY, 201 OLIN LIBRARY CORNELL UNIVERSITY ITHACA, NY 14853, 12 September 2022 (2022-09-12), XP091316379
- DIAN CHEN ET AL: "Viewpoint Equivariance for Multi-View 3D Object Detection", ARXIV.ORG, CORNELL UNIVERSITY LIBRARY, 201 OLIN LIBRARY CORNELL UNIVERSITY ITHACA, NY 14853, 25 March 2023 (2023-03-25), XP091469479
- QIANG CHEN: "Group DETR: Fast DETR Training with Group-Wise One-to-Many Assignment", 2023 IEEE/CVF INTERNATIONAL CONFERENCE ON COMPUTER VISION (ICCV), 2 August 2022 (2022-08-02), pages 6610 - 6619, XP093161254, ISBN: 979-8-3503-0718-4, Retrieved from the Internet <URL:https://arxiv.org/pdf/2207.13085v2> [retrieved on 20220802], DOI: 10.1109/ICCV51070.2023.00610
- RUPPEL FELICIA ET AL: "Transformers for Object Detection in Large Point Clouds", 2022 IEEE 25TH INTERNATIONAL CONFERENCE ON INTELLIGENT TRANSPORTATION SYSTEMS (ITSC), IEEE, 8 October 2022 (2022-10-08), pages 832 - 838, XP034216312, DOI: 10.1109/ITSC55140.2022.9921840

## Beschreibung

Die vorliegende Erfindung betrifft ein computerimplementiertes Verfahren zur Detektion und/oder Verfolgung und/oder Positionsprädiktion von mehreren Objekten aus Punktwolken-Daten mittels eines Transformers mit Attention-Modell. Weiterhin betrifft die vorliegende Erfindung ein Computerprogramm, das alle Schritte des Verfahrens ausführt und einen maschinenlesbaren Datenträger, auf dem das Computerprogramm gespeichert ist. Schließlich betrifft die Erfindung ein elektronisches Steuergerät, welches eingerichtet ist, um mittels des Verfahrens eine Detektion und/oder Verfolgung und/oder Positionsprädiktion von mehreren Objekten aus Punktwolken-Daten mittels eines Transformers mit Attention-Modell durchzuführen.

### Stand der Technik

In öffentlich verfügbaren Datensätzen ist es üblich, Objekte unterschiedlicher Klassen zu detektieren und ihre Position zu verfolgen, beispielsweile PKWs, Fahrräder und Fußgänger. Für die Umsetzung dessen gibt es mehrere Ansätze, insbesondere, was die Extraktion von Box-Parametern betrifft, d.h. die Position, Ausmaße und Orientierung der Objekte.

Eine Gruppe von 3D-Objektdetektoren basiert auf Ankerboxen. Dabei wird der Messbereich in ein Gitter aufgeteilt, und in jede Zelle jeweils eine Ankerbox für jede mögliche Objektklasse platziert. Die Klasse des Objekts ist also schon beim Platzieren der Ankerbox definiert. Daher ist es möglich, die Box-Parameter mithilfe eines speziell für diese Klasse trainierten Regressionskopfes zu extrahieren. Es hat sich hierbei als vorteilhaft erwiesen, ähnliche Klassen zu Gruppen zusammenzufassen, und diese in einem gemeinsamen Regressionskopf zu schätzen, beispielsweise Fahrräder und Motorräder.

In Query-basierten Verfahren ist es üblich, die Box-Parameter mithilfe eines gelernten Regressionskopfes aus den Feature-Vektoren zu extrahieren, die vom Transformer ausgegeben wurden. Dabei ist unerheblich, um welche Klasse von Objekt es sich handelt. Es wird vielmehr ein gemeinsamer Regressionskopf für alle Klassen verwendet. Deshalb können ähnliche Klassen nicht wie bei der Verwendung von Ankerboxen zu Gruppen zusammengefasst werden. Zum einschlägigen Stand der Technik gehören
ZIXIANG ZHOU ET AL: "CenterFormer: Center-based Transformer for 3D Object Detection",ARXIV.ORG, CORNELL UNIVERSITY LIBRARY, 201 OLIN LIBRARY CORNELL UNIVERSITY ITHACA, NY 14853, 12. September 2022 (2022-09-12), XP091316379;
   und
DIAN CHEN ET AL: "Viewpoint Equivariance for Multi-View 3D Object Detection",ARXIV.ORG, CORNELL UNIVERSITY LIBRARY, 201 OLIN LIBRARY CORNELL UNIVERSITY ITHACA, NY 14853, 25. März 2023 (2023-03-25), XP091469479.

### Offenbarung der Erfindung

Die Erfindung betrifft ein computerimplementiertes Verfahren zur Detektion und/oder Verfolgung und/oder Positionsprädiktion von mehreren Objekten aus Punktwolken-Daten mittels eines Transformers mit Attention-Modell. Die Punktwolken-Daten werden beispielsweise durch ein LiDAR erfasst. Allerdings ist dieses Verfahren nicht auf LiDAR beschränkt, sondern es können auch andere Sensortypen verwendet werden. Bevorzugt ist der Sensor bzw. das Sensorsystem an einem Fahrzeug angeordnet, sodass die Punktwolken-Daten aus dem Fahrzeug aufgenommen werden.

Der Zustand der Objekte ist im Feature-Space gespeichert. Das Verfahren umfasst die folgenden Schritte: Zu Beginn werden Feature-Vektoren aus den Punktwolken-Daten berechnet, insbesondere mithilfe eines Backbones. Ein Backbone ist ein neuronales Netz, das dafür verwendet wird, aus gemessenen Daten Features zu extrahieren, bzw. den Input in eine gewisse Feature-Repräsentation zu bringen, die dann weiterverarbeitet werden kann. Insbesondere wird ein Gitter-basiertes Backbone verwendet. Alternativ könnte auch ein Punkt-basierte Backbone verwendet werden. Es kann auf den Encoder des Transformers verzichtet werden. Wenn die Größe der Punktwolke es zulässt, kann allerdings auch ein Transformer-Encoder verwendet werden. Die somit berechneten Feature-Vektoren werden dann dem Transformer zugeführt und dienen als Key-Vektoren und Value-Vektoren für die Ermittlung der Cross-Attention.

Weiterhin werden Objekt-Queries bereitgestellt. Die Objekt-Queries können beispielsweise eingelernte Vektoren sein. Vorzugsweise werden die Objekt-Queries jedoch erhalten, indem zunächst Anker-Positionen bereitgestellt werden. Insbesondere werden aus den Punktwolken-Daten Anker-Positionen ermittelt. Hierzu können die Anker-Positionen insbesondere durch eine Sampling-Methode, wie beispielsweise Farthest-Point-Sampling (FPS), oder durch eine Schätz-Methode berechnet werden. Da die Anker-Positionen aus den aufgenommenen Daten ermittelt werden, ändern sich diese für jeden Zeitpunkt (Frame). Alternativ ist auch ein Einlernen der Anker-Positionen möglich.

Aus den Anker-Positionen können insbesondere mittels Encoding, beispielsweise Fourier-Encoding, Feature-Vektoren ermittelt werden. Die somit berechneten Feature-Vektoren dienen als Objekt-Queries für den Transformer. Die Objekt-Queries der Anker-Positionen dienen als Ausgangspunkte für die Suche nach Objekten. Allerdings ist die Suche nicht auf diese Anker-Positionen beschränkt, sondern es werden auch Objekte in einem Abstand zu diesen Anker-Positionen detektiert. Anker-Positionen entsprechen nicht Anchor-Boxen, wie sie bei anderen Detektionsansätzen verwendet werden. Die Objekt-Queries für den Transformer sind somit von Daten abhängig und nicht eingelernt. Dies bietet vor allem bei dünn besetzen Punktwolken Vorteile, da sonst viel Rechenressourcen für das Auffinden von Positionen, die tatsächlich Daten aufweisen, verschwendet wird. Solche dünn besetzen Punktwolken kommen insbesondere bei Messungen mit LiDAR vor. Die aus den Anker-Positionen ermittelten Objekt-Queries dienen als Slots für mögliche Objekte.

Zu einem Zeitpunkt (Frame) werden aus den Objekt-Queries, also den vorstehend beschriebenen Feature-Vektoren, die zu diesem ersten Zeitpunkt berechnet wurden, und den Key-Vektoren und Value-Vektoren, also den eingangs beschriebenen Feature-Vektoren, die zu diesem Zeitpunkt berechnet wurden, Ergebnis-Feature-Vektoren, welche auch als Decoder-Ausgabe-Vektoren bezeichnet werden, ermittelt. Diese Ermittlung erfolgt insbesondere mittels eines Decoders des Transformers. Aus den Ergebnis-Feature-Vektoren werden Box-Parameter, die ein Objekt beschreiben, also z. B. dessen Position, Ausmaße, Orientierung, Geschwindigkeit und/oder Klassenidentifikator, insbesondere relativ zu den Anker-Positionen, berechnet.

Es ist unerheblich, welche Art von Decoder verwendet wird, solange der Ansatz zur Objekterkennung auf Queries basiert. Beispielsweise kann Deformable Attention verwendet werden, Standard-Transformer Attention oder ein simpler Sampling-Mechanismus. Ebenso ist unerheblich, welches Backbone zur Vorverarbeitung verwendet wird und ob ein Transformer-Encoder verwendet wird.

Es erfolgt ein Zuordnen der Ergebnis-Feature-Vektoren zu Regressionsköpfen, wobei jeder Regressionskopf Regressionsparameter einer Gruppe von mindestens einer Klasse von Objekten enthält. Es kann vorgesehen sein, dass jede Gruppe mehrere Klassen enthält, oder dass einige Gruppen nur eine Klasse enthalten, während andere Gruppen mehrere Klassen enthalten. Unter Objekten werden dabei sowohl dreidimensionale Objekte wie beispielsweise PKWs oder Fußgänger, als auch zweidimensionale Objekte wie beispielsweise Fahrbahnrandmarkierungen, verstanden. Die Anzahl der Gruppen und die genaue Einteilung der Klassen kann je nach Anforderungen verändert werden. Außerdem ist die Erkennung von weiteren Klassen von Objekten möglich.

Die Regressionsköpfe können vorzugsweise trainiert werden, indem eine Zuordnung zwischen aus den Objekt-Queries geschätzten Objekten und einer Grundwahrheit (Ground Truth) erfolgt. Dabei wird jeweils eine Schätzung mit einer Grundwahrheitsbox verglichen, jeweils eine Abweichung bestimmt und in eine Kostenmatrix eingetragen, und die Zuordnung wird so gewählt, dass die Abweichung insgesamt minimal ist, wobei jedes Grundwahrheitsobjekt jeweils nur mit den Schätzungen aus dem zum Objekt passenden Regressionskopf verglichen wird. Dies führt dazu, dass die Kostenmatrix ihre Größe beibehält. Außerdem können vorhandene Matching-Algorithmen weiterverwendet werden, was ebenso sicherstellt, dass jedem Objekt-Query nur maximal ein Grundwahrheitsobjekt zugeordnet werden kann.

In einigen Query-basierten Verfahren sind die Objekt-Queries jeweils einer Position im Raum zugeordnet (ancor locations). In diesem Fall ist es möglich, die Position der Objekt-Queries nach jeder Schicht im Decoder zu verfeinern. Hierzu ist es bevorzugt, dass eine Position der Objekt-Queries nach jeder Schicht im Decoder dorthin verschoben wird, wo zu diesem Zeitpunkt das Objekt geschätzt wird. In einer bevorzugten Ausführungsform wird die Position jeweils zum gewichteten Mittel aus mehreren Objektkandidaten verschoben. In einer anderen bevorzugten Ausführungsform wird die Position jeweils zum Ort eines Objektkandidaten verschoben wird, der den höchsten Gewichtungsscore bzw. Gruppen-Score der Objektkandidaten aufweist. Der Gruppen-Score dient zum Gewichten der Objektkandidaten. Er ergibt sich als Summe von Klassen-Scores der in der jeweiligen Gruppe enthaltenen Klassen. Die Klassenscores werden insbesondere mit einem Class-Head berechnet, der gemeinsam mit den Regressionsköpfen trainiert wird.

Im Ergebnis werden somit mehrere Objekte aus Punktwolken-Daten zu einem ersten Zeitpunkt klassifiziert. Wenn eine Objektverfolgung erfolgen soll, müssen die Objekte an weiteren aufeinanderfolgenden Zeitpunkten ermittelt werden. Hierbei kann sich der Sensor, das Sensorsystem bzw. das System, an dem der Sensor angeordnet ist, also z. B. ein Fahrzeug, selbst mit einer Eigengeschwindigkeit bewegen. Im Folgenden wird die Eigengeschwindigkeit mittels eines Eigengeschwindigkeitskompensationsmoduls kompensiert und diese Kompensation auf die Ergebnis-Feature-Vektoren angewendet, um somit eigengeschwindigkeits-kompensierte, transformierte Ergebnis-Feature-Vektoren zu erhalten.

Die transformierten Ergebnis-Feature-Vektoren werden nun als Eingabe für den nächsten Zeitpunkt dem Decoder des Transformers zugeführt und dienen dort neben den Objekt-Queries als Slots für mögliche Objekte. Der Decoder des Transformers ermittelt jeweils nach einem Zeitschritt zu einem weiteren Zeitpunkt Ergebnis-Feature-Vektoren aus den transformierten Ergebnis-Feature-Vektoren, die für den vorherigen Zeitpunkt berechnet wurden, aus den berechneten Objekt-Queries, die zu diesem Zeitpunkt wie oben beschrieben berechnet wurden, und aus den Key-Vektoren und Value-Vektoren, die zu diesem Zeitpunkt wie eingangs beschrieben berechnet wurden. Diese Berechnung kann für beliebig viele Zeitschritte fortgesetzt werden. Die berechneten Ergebnis-Feature-Vektoren werden schließlich wie oben beschrieben den Objekten zugeordnet und somit die mehreren Objekte verfolgt.

Im Ergebnis wird somit eine Objektverfolgung von mehreren Objekten aus Punktwolken-Daten mit einer Eigengeschwindigkeitskompensation erhalten.

Für alle Objekte, die vor dem Zeitschritt einer Gruppe eines Regressionskopfes zugeordnet wurden, ist in einer bevorzugen Ausführungsform vorgesehen, dass nach dem Zeitschritt die Regressionsköpfe aller anderen Gruppen maskiert werden. Dadurch wird sichergestellt, dass die Objekte im Verlauf der Objektverfolgung ihre Gruppe nicht mehr ändern. In einer anderen bevorzugen Ausführungsform ist vorgesehen, dass allen Objekten erlaubt wird, nach dem Zeitschritt ihre Zuordnung zu einer Gruppe zu ändern. Dadurch können mehrere Hypothesen, welcher Gruppe ein Objekt zuzuordnen ist, über die Zeit aufrechterhalten werden, wobei die Ausgabe der anderen Regressionsköpfe gespeichert wird. Dies ermöglicht einen Wechsel der Klasse innerhalb des Verlaufs einer Objektverfolgung, sowie eine Zuordnung zu mehreren Klassen-Hypothesen.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Lediglich ein Transformer muss auf dem elektronischen Steuergerät implementiert sein oder werden. Zur Implementierung ist das Computerprogramm auf dem maschinenlesbaren Speichermedium gespeichert.

Durch Aufspielen des Computerprogramms und eines Transformers auf ein herkömmliches elektronisches Steuergerät, wird das elektronische Steuergerät erhalten, welches eingerichtet ist, um mittels des Verfahrens eine Detektion und/oder Verfolgung und/oder Positionsprädiktion von mehreren Objekten aus Punktwolken-Daten mittels eines Transformers mit Attention-Modell durchzuführen.

### Kurze Beschreibung der Zeichnungen

Ausführungsbeispiele der Erfindung sind in den Zeichnungen dargestellt und in der nachfolgenden Beschreibung näher erläutert.
Figur 1 zeigt die Zusammenfassung von Objektklassen zu Objektgruppen in einem Ausführungsbeispiel des erfindungsgemäßen Verfahrens.
Figur 2 zeigt in einem Diagramm Längenabweichungen innerhalb der Objektklassen.
Figur 3 zeigt ein Ablaufdiagramm eines Ausführungsbeispiels des erfindungsgemäßen Verfahrens.
Figur 4a zeigt schematisch eine Verfeinerung der Position von Objekt-Queries in einem Ausführungsbeispiel des erfindungsgemäßen Verfahrens.
Figur 4b zeigt schematisch eine Verfeinerung der Position von Objekt-Queries in einem anderen Ausführungsbeispiel des erfindungsgemäßen Verfahrens.

### Ausführungsbeispiele der Erfindung

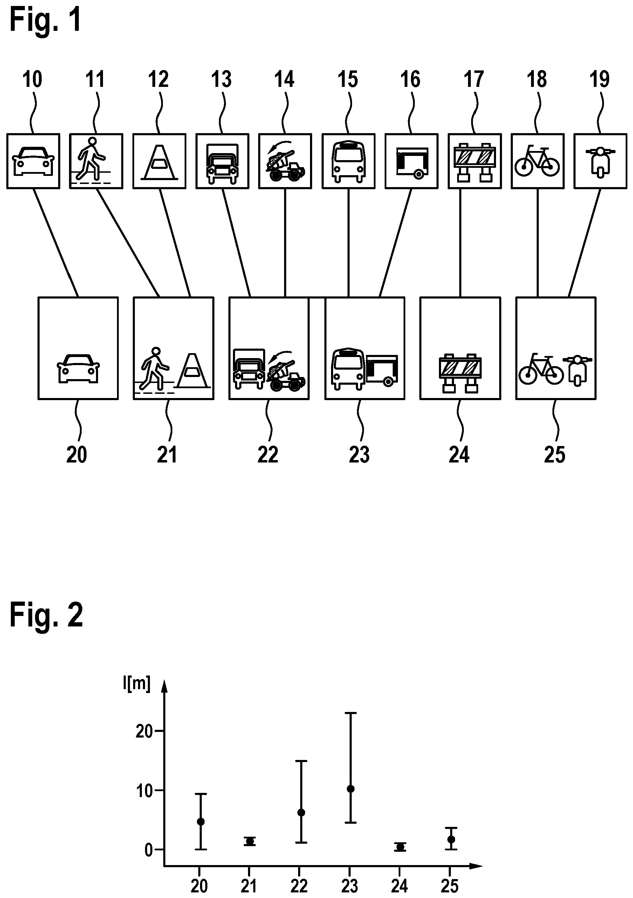

Figur 1 zeigt, wie in einem Ausführungsbeispiel des erfindungsgemäßen computerimplementierten Verfahrens Klassen von detektierbaren Objekten in Gruppen aufgeteilt werden. Bei den Klassen handelt es sich beispielsweise um PKWs 10, Fußgänger 11, Verkehrskegel 12, LKWs 13, Baufahrzeuge 14, Busse 15, Anhänger 16, Absperrungen 17, Fahrräder 18 und Krafträder 19. Die erste Gruppe 20 beinhaltet die Klasse 10 der PKWs. Die zweite Gruppe 21 beinhaltet die Klassen 11, 12 der Fußgänger und Verkehrskegel. Die dritte Gruppe 22 beinhaltet die Klassen 13, 14 der LKWs und Baufahrzeuge. Die vierte Gruppe 23 beinhaltet die Klassen 15, 16 der Busse und Anhänger. Die fünfte Gruppe 24 beinhaltet die Klasse 17 der Absperrungen. Die sechste Gruppe 25 beinhaltet die Klassen 18, 19 der Fahrräder und Krafträder.

Für jede der Gruppen 20 - 25 wird ein Regressionskopf trainiert. Objekt-Queries haben in dem Verfahren die Möglichkeit, ein Objekt jeder Klasse zu finden, daher sind sie mit allen Regressionsköpfen kompatibel.

Während des Trainings erfolgt eine Zuordnung zwischen aus den Objekt-Queries geschätzten Objekten und der Grundwahrheit (Ground Truth). Dazu wird jede Schätzung dₘ mit jeder Grundwahrheitsbox bₖ verglichen, wobei m = 1 ... M und k = 1...K gilt. Es wird jeweils eine Abweichung bestimmt und in eine Kostenmatrix der Größe K x M eingetragen, und die Zuordnung so gewählt, dass die Abweichung insgesamt minimal ist. Bei Erhalten von N Regressionsköpfen, entstehen aus jedem der M Objekt-Queries nun N potentielle Objekte ${d}_{m}^{n}$ mit n = 1 ... N, m = 1...M. Alle sollen in der Zuordnung berücksichtigt werden, ohne die Kostenmatrix zu vergrößern. Außerdem soll jeder Query nur maximal einem Grundwahrheitsobjekt zugeordnet werden. Um diesen Anforderungen gerecht zu werden, wird jedes Grundwahrheitsobjekt bₖ mit Klasse iₖ jeweils nur mit den Schätzungen aus dem zum Objekt passenden Regressionskopf verglichen, ${d}_{m}^{n \left({i}_{k}\right)}$ mit m = 1 ... M. Dies führt dazu, dass die Kostenmatrix weiterhin die Größe K x M hat. Außerdem können vorhandene Matching-Algorithmen weiterverwendet werden, was ebenso sicherstellt, dass jedem Query nur maximal ein Grundwahrheitsobjekt zugeordnet werden kann.

Figur 2 zeigt die mittlere Länge l der Objekte innerhalb jeder der Gruppen 20 - 25 zusammen mit ihren 25 % / 75 % Längenabweichungen. Es ist erkennbar, dass die Längenabweichungen innerhalb einer Gruppe klein gegenüber den Längenunterschieden zwischen den Gruppen sind. Dadurch ist eine gute Unterscheidbarkeit zwischen Objekten unterschiedlicher Gruppen möglich.

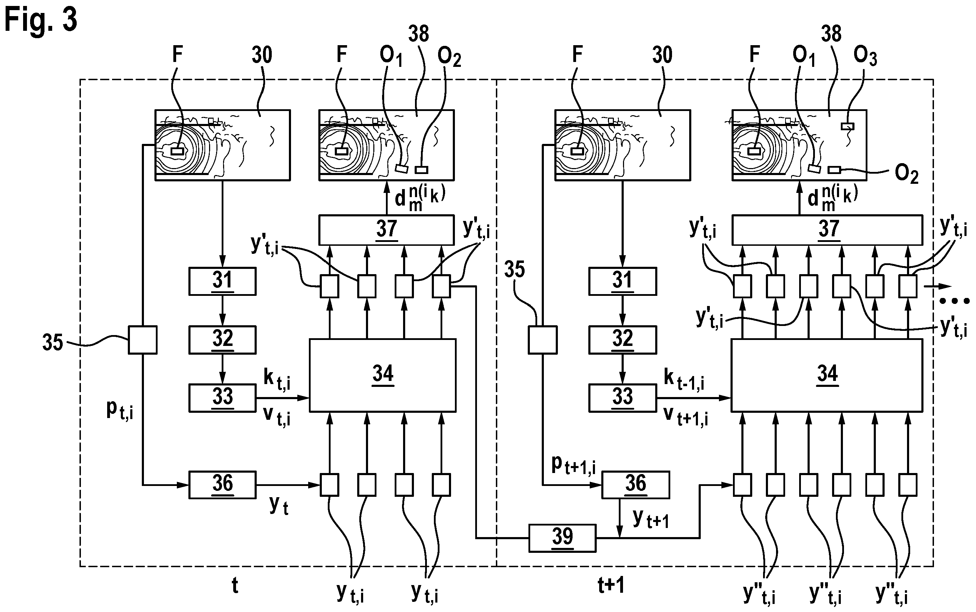

Figur 3 zeigt ein Ablaufdiagramm des erfindungsgemäßen Verfahrens zu zwei aufeinanderfolgenden Zeitpunkten t und t+1. Nachfolgend bezeichnen i und k als Indizes Laufvariablen.

Die linke Seite betrifft den ersten Zeitpunkt t. Zu Beginn erfasst ein LiDAR-Sensor eines Fahrzeugs F die Umgebung. Eine visuelle Darstellung dieser aufgenommenen Punktwolken-Daten ist mit 30 bezeichnet. Aus den Punktwolken-Daten berechnet ein Backbone 31 Feature-Vektoren, welche dann durch ein Positions-Encoding 32, z.B. mittels Sinus und Cosinus, augmentiert werden und schließlich als Key-Vektoren *k*_{*t*,*i*} und Value-Vektoren *v*_{*t*,*i*} über einen deformierbaren Encoder 33 eines Transformers für den ersten Zeitpunkt t einem Decoder 34 eines Transformers zugeführt werden.

Gleichzeitig werden aus den Punktwolken-Daten durch eine Sampling- oder Schätz-Methode 35, beispielsweise Farthest-Point-Sampling, Anker-Positionen ***ρ**_{t,i}* zum ersten Zeitpunkt t ermittelt, die dann ein Positions-Encoding 36 durchlaufen, beispielsweise ein Fourier-Encoding: ${y}_{i} = FFN \left[sin\left({Bρ}_{i}\right),cos\left({Bρ}_{i}\right)\right]$

B ist dabei eine Matrix, die Einträge der Normalverteilung aufweist, FFN stellt ein Feed-Forward-Netz dar, welches hier aus zwei Schichten mit einer ReLU-Aktivierung (Rectified Linear Unit) besteht. *yᵢ* sind die berechneten Feature-Vektoren, welche als Objekt-Queries dem Decoder 34 des Transformers zugeführt werden.

Das für den ersten Zeitpunkt t ausgegebene Set von Feature-Vektoren ist mit Yt bezeichnet und bestehen aus den Objekt-Queries *y_{t,i}*. Jedes Objekt-Query ***y**_{t,i}* dient als Slot (In Figur 3 dargestellt durch einzelne Kästchen) für ein mögliches Objekt. Der Decoder 34 des Transformers besteht beispielsweise aus sechs Schichten mit jeweils acht Attention-Heads. Der Decoder 34 ermittelt zum ersten Zeitpunkt t aus den Objekt-Queries *y*_{*t*,*i*} sowie den Key-Vektoren *k_{t,i}* und den Value-Vektoren *v*_{*t*,*i*} Ergebnis-Feature-Vektoren ${y}_{t , i}^{′}$. Die Dimension der Objekt-Queries *y_{t,i}*, der Key-Vektoren *k_{t,i}* und der Value-Vektoren *v*_{*t*,*i*} beträgt beispielsweise 256. Die Anzahl von Objekt-Queries *y*_{*t*,*i*}, kann sich allerdings auch von der Anzahl an Key-Vektoren *k_{t,i}* und Value-Vektoren *v*_{*t*,*i*} unterscheiden.

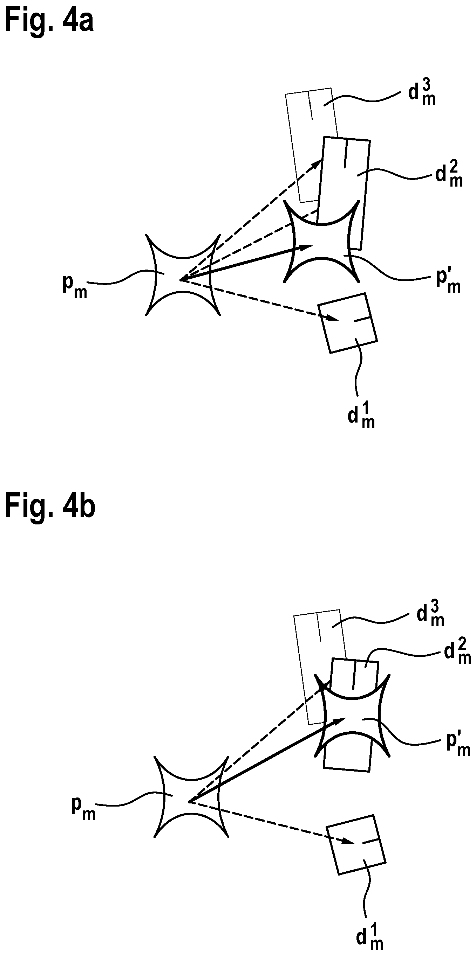

Die Position pₘ der Objekt-Queries *y*_{*t*,*i*} wird nach jeder Schicht im Decoder 34 verfeinert. Dazu wird die Position pₘ der Objekt-Queries *y*_{*t*,*i*} dorthin verschoben, wo zu diesem Zeitpunkt das Objekt geschätzt wird. Hierzu kann ein Verfahren verwendet werden, wie es in F. Ruppel, F. Faion, C. Gläser and K. Dietmayer, "Transformers for Object Detection in Large Point Clouds," 2022 IEEE 25th International Conference on Intelligent Transportation Systems (ITSC), Macau, China, 2022, pp. 832-838, doi: 10.1109/ITSC55140.2022.9921840. beschrieben wird. Werden durch die Gruppen-Regressions-Heads nun allerdings N Objektkandidaten pro Objekt-Query erhalten, ist nicht eindeutig, wohin die Query-Position verfeinert werden soll. Dies wird in einem in Figur 4a dargestellten Ausführungsbeispiel des Verfahrens so gelöst, dass die Objekt-Query-Position pₘ jeweils zum gewichteten Mittel aus den Objektkandidaten ${d}_{m}^{n}$ mit n = 1 ... N, m = 1... M gemäß der folgenden Formel verschoben wird: ${p}_{m}^{′} = {\sum }_{n = 1}^{N} {s}_{n} {d}_{m}^{n}$

Hierbei bezeichnet sₙ einen Gruppen-Score zum Gewichten der Objektkandidaten. Dieser ergibt sich als Summe von Klassen-Scores der in der jeweiligen Gruppe enthaltenen Klassen. Die Klassenscores werden mit einem Class-Head berechnet, der gemeinsam mit den Regressionsköpfen trainiert wird. Sowohl im Training als auch in der Inferenz kann wie beschrieben verfahren werden.

In einem anderen Ausführungsbeispiel ist es, vorzugsweise in der Inferenz, alternativ auch möglich, die Objekt-Query-Positionen zum Ort des Objektkandidaten mit dem höchsten Gruppen-Score zu verschieben. Dies ist in Figur 4b dargestellt.

Hierdurch werden zwei Objekte O₁ und O₂ zum ersten Zeitpunkt t detektiert. In den Regressionsköpfen 37 werden die Ergebnis-Feature-Vektoren ${y}_{t , i}^{′}$ zum Objekt passenden Regressionsköpfe 37 zugeordnet. Die Objekte O₁, O₂ werden detektiert und sind hier in der mit 38 bezeichneten visuellen Darstellung eingezeichnet.

Auf der rechten Seite in Figur 3 ist die Auswertung für einen zweiten Zeitpunkt t+1 dargestellt, der nach einem Zeitschritt, der durch die Wiederholrate der Aufnahme des LiDAR-Sensors definiert ist, dem ersten Zeitpunkt t folgt. Das Fahrzeug F bewegt sich in diesem Zeitschritt mit seiner Eigengeschwindigkeit fort. Dies wirkt sich auf die Auswertung der gemessenen Daten und die relative Position und Geschwindigkeit der Objekte O₁, O₂ aus. Es wird eine Eigengeschwindigkeitskompensation 39 durchgeführt. Die Eigengeschwindigkeitskompensation 39 für den Zeitschritt zwischen dem ersten Zeitpunkt t und dem zweiten Zeitpunkt t+1 kann mittels eines Verfahrens erfolgen, das in F. Ruppel, F. Faion, C. Gläser, and K. Dietmayer, Transformers for Object Detection in Large Point Clouds, in IEEE Int. Conf. Intell. Transp. Syst., 2022 beschrieben wird. Hierbei werden aus den Ergebnis-Feature-Vektoren ${y}_{t , i}^{′}$ für den ersten Zeitpunkt t, den Anker-Positionen *ρ_{t,i}*, und einer Posenänderung P transformierte Ergebnis-Feature-Vektoren ${y}_{t , k}^{"}$ erhalten: ${y}_{t , k}^{"} = EMC \left({y}_{t , i}^{′}, {ρ}_{i}, P\right)$

Analog zum ersten Zeitpunkt t erfasst auch hier zu Beginn der LiDAR-Sensor die Umgebung und das Backbone 31 berechnet aus den Punktwolken-Daten Feature-Vektoren, welche durch das Positions-Encoding 32, beispielsweise mittels Sinus und Cosinus, augmentiert werden und schließlich über den deformierbaren Encoder 33 als Key-Vektoren *k*_{*t+*1,*i*} und Value-Vektoren *v*_{*t*+1,*i*} für den zweiten Zeitpunkt t+1 dem Decoder 34 des Transformers zugeführt werden. Gleichzeitig werden aus den Punktwolken-Daten durch die Sampling-Methode 35, Anker-Positionen *ρ*_{*t*+1*,i*} zum zweiten Zeitpunkt t+1 ermittelt, die dann das Fourier-Encoding 36 durchlaufen. Es werden Objekt-Queries *y*_{*t*+1,*i*} für den zweiten Zeitpunkt t+1 erhalten.

Das für den zweiten Zeitpunkt t+1 ausgegebene Set von Feature-Vektoren ist mit **Y**ₜ₊₁ bezeichnet und bestehen aus den Objekt-Queries ***y***_{*t*+1,*i*} für den zweiten Zeitpunkt t+1 und den transformierten Ergebnis-Feature-Vektoren ${y}_{t , k}^{"}$*,* die für den ersten Zeitpunkt t berechnet wurden, und kann als Vereinigung ${Y}_{t + 1} = {\left\{{y}_{t , k}^{"}\right\}}_{k = 1}^{K} ∪ {\left\{{y}_{t + 1 , i}\right\}}_{i = 1}^{M}$ dargestellt werden. Jedes Objekt-Query *y*_{*t*+1,*i*} und jeder transformierte Ergebnis-Feature-Vektor ${y}_{t , k}^{"}$ dient als Slot (in Figur 3 dargestellt durch einzelne Kästchen) für ein mögliches Objekt.

Der Decoder 34 ermittelt aus den Objekt-Queries *y*_{*t*,*i*}, den transformierten Ergebnis-Feature-Vektoren ${y}_{t , k}^{"}$ sowie den Key-Vektoren *k*_{*t+*1,*i*} und den Value-Vektoren *v*_{*t*+1,*i*} Ergebnis-Feature-Vektoren ${y}_{t + 1 , i}^{′}$ zum zweiten Zeitpunkt t+1. Es wird neben den beiden Objekten O₁ und O₂ ein drittes Objekt O₃ detektiert, dessen Pfad weiterverfolgt wird. In den Regressionsköpfen 37 werden die Ergebnis-Feature-Vektoren ${y}_{t , i}^{′}$ aller Objekte O₁, O₂, O₃ passenden Regressionsköpfen 37 zugeordnet. Auch hier sind die Objekte O₁, O₂, O₃ in der mit 38 bezeichneten visuellen Darstellung eingezeichnet. Hierdurch werden die mehreren Objekte O₁, O₂, O₃ zu einem weiteren Zeitschritt t+1 detektiert.

In einem Ausführungsbeispiel des Verfahrens werden zum zweiten Zeitpunkt t+1 für die Objekte O₁, O₂, die bereits zum ersten Zeitpunkt t erkannt und einer der Gruppen 20 - 25 zugeordnet wurden, jeweils die Regressionsköpfe 37, welche anderen Gruppen, als die bereits zugeordnete Gruppe enthalten, maskiert. Diese Objekte O₁, O₂ behalten also automatisch ihre Gruppenzuordnung. Nur die Ergebnis-Feature-Vektoren ${y}_{t + 1 , i}^{′}$ des zum zweiten Zeitpunkt erstmals erkannten Objekt O₃ werden mit allen Regressionsköpfen 37 verglichen.

In einem anderen Ausführungsbeispiel des Verfahrens, wird zum zweiten Zeitpunkt t+1 für alle Objekte O₁, O₂, O₃ ihre jeweilige Zuordnung zu einer der Gruppen 20 - 25 erneut bestimmt.

Die genannten Schritte werden für weitere Zeitpunkte durchgeführt, sodass eine Objektverfolgung der mehreren Objekte O₁, O₂, O₃ erfolgt. Dabei werden die genannten Schritte, Eingaben und Ausgaben entsprechend den Zeitpunkten angepasst.

## Patentansprüche

1. Computerimplementiertes Verfahren zur Detektion und/oder Verfolgung und/oder Positionsprädiktion von mehreren Objekten (O₁, O₂, O₃) aus Punktwolken-Daten mittels eines Transformers mit Attention-Modell, wobei der Zustand der verfolgten Objekte (O₁, O₂, O₃) im Feature-Space gespeichert ist, mit folgenden Schritten:
- Berechnen von Feature-Vektoren aus den Punktwolken-Daten durch ein Backbone (31), wobei die Feature-Vektoren als Key-Vektoren (*k_{t,i}, k*_{*t+*1*,i*}) und Value-Vektoren (*v_{t,i}, v*_{*t+*1*,i*}) für den Transformer dienen;
- Ermitteln von Ergebnis-Feature-Vektoren ( ${y}_{t , i}^{′}$) zu einem Zeitpunkt (t) aus Objekt-Queries (*y*_{*t*,*i*}) und den Key-Vektoren (*k_{t,i}*) und Value-Vektoren (*v*_{*t*,*i*}) zu diesem Zeitpunkt (t); und
- Zuordnen der Ergebnis-Feature-Vektoren ( ${y}_{t , i}^{′}$) zu Regressionsköpfen (37), wobei jeder Regressionskopf Regressionsparameter einer Gruppe (20 - 25) von mindestens einer Klasse (10 - 19) von Objekten (O₁, O₂, O₃) enthält.

2. Computerimplementiertes Verfahren nach Anspruch 1, **dadurch gekennzeichnet, dass** ein Ermitteln von Feature-Vektoren aus Anker-Positionen (*ρ_{t,i}*, *ρ*_{*t+*1*,i*}) mittels eines Encodings (36) erfolgt, wobei die Feature-Vektoren als Objekt-Queries (*y_{t,i}*, *y*_{*t+*1,*i*}) dienen.

3. Computerimplementiertes Verfahren nach Anspruch 2, **dadurch gekennzeichnet, dass** die Anker-Positionen (*ρ_{t,i}, ρ*_{*t+*1*,i*}) aus den Punktwolken-Daten durch eine Sampling-Methode oder Schätz-Methode (35) berechnet werden.

4. Computerimplementiertes Verfahren nach einem der Ansprüche 1 bis 3, **dadurch gekennzeichnet, dass** die Regressionsköpfe (37) trainiert werden, indem eine Zuordnung zwischen aus den Objekt-Queries (*y_{t,i}*, *y*_{*t+*1*,i*}) geschätzten Objekten (O₁, O₂, O₃) und einer Grundwahrheit erfolgt, indem jeweils eine Schätzung mit einer Grundwahrheitsbox verglichen, jeweils eine Abweichung bestimmt und in eine Kostenmatrix eingetragen wird, und die Zuordnung so gewählt wird, dass die Abweichung insgesamt minimal ist, wobei jedes Grundwahrheitsobjekt jeweils nur mit den Schätzungen aus dem zum Objekt passenden Regressionskopf (37) verglichen wird.

5. Computerimplementiertes Verfahren nach einem der Ansprüche 1 bis 4, **dadurch gekennzeichnet, dass** eine Position (pₘ) der Objekt-Queries (*y_{t,i}*) nach jeder Schicht im Decoder (34) dorthin verschoben, wo zu diesem Zeitpunkt das Objekt (O₁, O₂, O₃) geschätzt wird.

6. Computerimplementiertes Verfahren nach Anspruch 5, **dadurch gekennzeichnet, dass** die Position (pₘ) jeweils zum gewichteten Mittel aus mehreren Objektkandidaten ( ${d}_{m}^{n}$) verschoben wird.

7. Computerimplementiertes Verfahren nach Anspruch 5, **dadurch gekennzeichnet, dass** die Position (pₘ) jeweils zum Ort eines Objektkandidaten ( ${d}_{m}^{n}$) verschoben wird, der den höchsten Gewichtungsscore der Objektkandidaten ( ${d}_{m}^{n}$) aufweist.

8. Computerimplementiertes Verfahren nach einem der Ansprüche 1 bis 7, **dadurch gekennzeichnet, dass** Eigengeschwindigkeitskompensation (39) der Ergebnis-Feature-Vektoren ( ${y}_{t , i}^{′}$) durchgeführt wird, um transformierte Ergebnis-Feature-Vektoren ( ${y}_{t , k}^{"}$) zu erhalten und Ergebnis-Feature-Vektoren ( ${y}_{t + 1 , i}^{′}$) nach einem Zeitschritt aus den transformierten Ergebnis-Feature-Vektoren ( ${y}_{t , k}^{"}$) zum vorherigen Zeitpunkt (t) und berechneten Objekt-Queries *y*_{*t*+1,*i*} und den Key-Vektoren *k*_{*t+*1*,i*} und Value-Vektoren *v*_{*t+*1,*i*} zu diesem Zeitpunkt (t+1) mittels des Decoders (34) des Transformers ermittelt werden.

9. Computerimplementiertes Verfahren nach Anspruch 8, **dadurch gekennzeichnet, dass** für alle Objekte (O₁, O₂, O₃), die vor dem Zeitschritt einer Gruppe (20 - 25) eines Regressionskopfes (37) zugeordnet wurden, nach dem Zeitschritt die Regressionsköpfe (37) aller anderen Gruppen (20 - 25) maskiert werden.

10. Computerimplementiertes Verfahren nach Anspruch 9, **dadurch gekennzeichnet, dass** allen Objekten (O₄, O₂, O₃) erlaubt wird, nach dem Zeitschritt ihre Zuordnung zu einer Gruppe (20 - 25) zu ändern.

11. Computerprogramm, welches eingerichtet ist, jeden Schritt des Verfahrens nach einem der Ansprüche 1 bis 10 durchzuführen.

12. Maschinenlesbares Speichermedium, auf welchem ein Computerprogramm nach Anspruch 11 gespeichert ist.

13. Elektronisches Steuergerät, welches eingerichtet ist, um mittels eines Verfahrens nach einem der Ansprüche 1 bis 10 eine Detektion und/oder Verfolgung und/oder Positionsprädiktion von mehreren Objekten (O₁, O₂, O₃) aus Punktwolken-Daten mittels eines Transformers mit Attention-Modell durchzuführen.

## Claims

1. Computer-implemented method for detecting and/or tracking and/or predicting the position of multiple objects (O₁, O₂, O₃) from point cloud data by way of a transformer with an attention model, wherein the state of the tracked objects (O₁, O₂, O₃) is stored in the feature space, comprising the following steps:
- calculating feature vectors from the point cloud data by way of a backbone (31), wherein the feature vectors serve as key vectors (k_{t,i}, k_{t+1,i}) and value vectors (v_{t,i}, v_{t+1,i}) for the transformer;
- determining result feature vectors (y'_{t,i}) at a time (t) from object queries (y_{t,i}) and the key vectors (k_{t,i}) and value vectors (v_{t,i}) at this time (t); and
- assigning the result feature vectors (y'_{t,i}) to regression heads (37), wherein each regression head contains regression parameters of a group (20 - 25) of at least one class (10 - 19) of objects (O₁, O₂, O₃).

2. Computer-implemented method according to Claim 1, **characterized in that** feature vectors are determined from anchor positions (p_{t,i}, p_{t+1,i}) by way of an encoding (36), wherein the feature vectors serve as object queries (y_{t,i}, y_{t+1,i}).

3. Computer-implemented method according to Claim 2, **characterized in that** the anchor positions (p_{t,i}, p_{t+1,i}) are calculated from the point cloud data by way of a sampling method or estimation method (35).

4. Computer-implemented method according to one of Claims 1 to 3, **characterized in that** the regression heads (37) are trained by carrying out an assignment between objects (O₁, O₂, O₃) estimated from the object queries (y_{t,i}, y_{t+1,i}) and a ground truth, by virtue of comparing in each case an estimate with a ground truth box, ascertaining a deviation in each case and entering it into a cost matrix, and the assignment is selected such that the overall deviation is minimal, wherein each ground truth object is compared in each case only with the estimates from the regression head (37) matching the object.

5. Computer-implemented method according to one of Claims 1 to 4, **characterized in that** a position (pₘ) of the object queries (y_{t,i}) is shifted, after each layer in the decoder (34), to where the object (O₁, O₂, O₃) is estimated to be at this time.

6. Computer-implemented method according to Claim 5, **characterized in that** the position (pₘ) is shifted in each case to the weighted average of multiple object candidates (dⁿₘ).

7. Computer-implemented method according to Claim 5, **characterized in that** the position (pₘ) is shifted in each case to the location of an object candidate (dⁿₘ) that has the highest weighting score of the object candidates (dⁿₘ).

8. Computer-implemented method according to one of Claims 1 to 7, **characterized in that** ego-speed compensation (39) of the result feature vectors (y'_{t,i}) is carried out in order to obtain transformed result feature vectors (y"_{t,k}), and result feature vectors (y'_{t+1,i}), after a time step, are determined by way of the decoder (34) of the transformer from the transformed result feature vectors (y"_{t,k}) at the previous time (t) and calculated object queries (y_{t+1,i}) and the key vectors (k_{t+1,i}) and value vectors (v_{t+1,i}) at this time (t+1).

9. Computer-implemented method according to Claim 8, **characterized in that**, for all objects (O₁, O₂, O₃) that have been assigned to a group (20 - 25) of a regression head (37) before the time step, the regression heads (37) of all other groups (20 - 25) are masked after the time step.

10. Computer-implemented method according to Claim 9, **characterized in that** all objects (O₁, O₂, O₃) are permitted to change their assignment to a group (20 - 25) after the time step.

11. Computer program configured to carry out each step of the method according to one of Claims 1 to 10.

12. Machine-readable storage medium on which a computer program according to Claim 11 is stored.

13. Electronic control unit configured to detect and/or track and/or predict the position of multiple objects (O₁, O₂, O₃) from point cloud data by way of a transformer with an attention model by way of a method according to one of Claims 1 to 10.

## Revendications

1. Procédé mis en œuvre par ordinateur pour la détection et/ou le suivi et/ou la prédiction de position de plusieurs objets (O₁, O₂, O₃) à partir de données de nuage de points au moyen d'un transformateur avec modèle d'attention, l'état des objets suivis (O₁, O₂, O₃) étant mémorisé dans l'espace de caractéristiques, avec des étapes suivantes :
- calcul de vecteurs de caractéristiques à partir des données de nuage de point par un squelette (31), les vecteurs de caractéristiques faisant office de vecteurs clés (k_{t,i}, k_{t+1,i}) et de vecteurs de valeur (v_{t,i}, v_{t+1,i}) pour le transformateur ;
- détermination de vecteurs de caractéristiques de résultat (y'_{t,i}) à un instant (t) à partir de requêtes d'objet (y_{t,i})et de vecteurs clés (k_{t,i}) et de vecteurs de valeurs (v_{t,i}) à cet instant (t) ; et
- association des vecteurs de caractéristiques de résultat (y'_{t,i}) à des têtes de régression (37), chaque tête de régression contenant des paramètres de régression d'un groupe (20 - 25) d'au moins une classe (10 - 19) d'objets (O₁, O₂, O₃).

2. Procédé mis en œuvre par ordinateur selon la revendication 1, **caractérisé en ce qu'**une détermination de vecteurs de caractéristiques à partir de positions d'ancrage (p_{t,i}, p_{t+1,i}) est effectuée au moyen d'un codage (36), les vecteurs de caractéristiques faisant office de requêtes d'objet (y_{t,i}, y_{t+1,i}).

3. Procédé mis en œuvre par ordinateur selon la revendication 2, **caractérisé en ce que** les positions d'ancrage (p_{t,i}, p_{t+1,i}) à partir des données de nuage de points sont calculées par un procédé d'échantillonnage ou un procédé d'estimation (35).

4. Procédé mis en œuvre par ordinateur selon l'une des revendications 1 à 3, **caractérisé en ce que** les têtes de régression (37) sont entraînées par une association entre des objets (O₁, O₂, O₃) estimés à partir des requêtes d'objet (y_{t,i}, y_{t+1,i}) et une vérité fondamentale en comparant respectivement une estimation à un cadre de vérité fondamentale, en déterminant respectivement un écart et en l'entrant dans une matrice de coût, et l'association est choisie de telle sorte que l'écart est globalement minimal, chaque objet de vérité fondamentale étant comparé respectivement seulement aux estimations de la tête de régression (37) adaptée à l'objet.

5. Procédé mis en œuvre par ordinateur selon l'une des revendications 1 à 4, **caractérisé en ce qu'**une position (pₘ) des requêtes d'objet (y_{t,i}) est décalée après chaque couche dans le décodeur (34) là où, à cet instant, l'objet (O₁, O₂, O₃) est estimé.

6. Procédé mis en œuvre par ordinateur selon la revendication 5, **caractérisé en ce que** la position (pₘ) est décalée respectivement par rapport à la moyenne pondérée de plusieurs candidats objets (dⁿₘ).

7. Procédé mis en œuvre par ordinateur selon la revendication 5, **caractérisé en ce que** la position (pₘ) est décalée respectivement vers l'emplacement d'un candidat objet (dⁿₘ), qui présente le score de pondération le plus élevé des candidats objet (dⁿₘ).

8. Procédé mis en œuvre par ordinateur selon l'une des revendications 1 à 7, **caractérisé en ce qu'**une compensation de vitesse naturelle (39) des vecteurs de caractéristiques de résultat (y'_{t,i}) est effectuée pour obtenir des vecteurs de caractéristiques de résultat transformés (y"_{t,k}) et des vecteurs de caractéristiques de résultat (y'_{t+1,i}) sont déterminés après un intervalle de temps à partir des vecteurs de caractéristiques de résultat transformés (y"_{t,k}) à l'instant précédent (t) et des requêtes d'objet calculées y_{t+1,i} et des vecteurs clés k_{t+1,i} et des vecteurs de valeur v_{t+1,i} à cet instant (t+1) au moyen du décodeur (34) du transformateur.

9. Procédé mis en œuvre par ordinateur selon la revendication 8, **caractérisé en ce que** pour tous les objets (O₁, O₂, O₃), qui ont été associés avant le laps de temps à un groupe (20 - 25) d'une tête de régression (37), les têtes de régression (37) de tous les autres groupes (20 - 25) sont masquées après le laps de temps.

10. Procédé mis en œuvre par ordinateur selon la revendication 9, **caractérisé en ce que** tous les objets (O₁, O₂, O₃) sont autorisés à modifier leur association à un groupe (20 - 25) après le laps de temps.

11. Programme informatique qui est mis au point pour réaliser chaque étape du procédé selon l'une des revendications 1 à 10.

12. Support de stockage lisible par machine, sur lequel est stocké un programme informatique selon la revendication 11.

13. Appareil de commande électronique qui est mis au point pour réaliser, au moyen d'un procédé selon l'une des revendications 1 à 10, une détection et/ou un suivi et/ou une prédiction de position de plusieurs objets (O₁, O₂, O₃) à partir de données de nuage de points au moyen d'un transformateur avec un modèle d'attention.
